# EUROPEAN PATENT SPECIFICATION

(11) **EP 4 178 089 B1**
(45) Date of publication and mention of the grant of the patent: **14.02.2024**
(21) Application number: 21425054.0
(22) Date of filing: 03.11.2021
(51) Int. Cl.: H02K 7/06, H02K 5/173, H02K 7/08, H02K 11/20

(54) **LINEAR ELECTROMECHANICAL ACTUATOR**
LINEARER ELEKTROMECHANISCHER AKTUATOR
ACTIONNEUR ÉLECTROMÉCANIQUE LINÉAIRE

(43) Date of publication of application: 10.05.2023
(73) Proprietor: Diakont S.r.l., 50025 Montespertoli (FI) (IT)
(72) Inventor: Fedosovskiy, Mikhail, 197720 Saint Petersburg (RU); Kerdol, Zakhar, 188689 Yanino (RU)
(74) Representative: Emmi, Mario

(56) References cited:
- EP-A1- 3 553 342
- EP-A1- 3 754 225
- EP-A2- 2 854 264
- US-B2- 8 302 273

## Description

### FIELD OF THE INVENTION

The present application relates to linear electromechanical actuators, in particular to linear electromechanical actuators for moving an actuating element of a mechanism, to which the actuator is attached.

### DESCRIPTION OF THE RELATED ART

Linear electromechanical actuators (hereinafter referred to as EMA) are used, in particular, for moving the actuating element, e.g. traveling electrode of a welding gun for resistance spot welding of metal sheets, e.g., car body parts. The welding gun is positioned so that the stationary electrode is arranged at a right angle with respect to one of the sheets to be welded and contacts it. An EMA moves the traveling electrode and ensures that the traveling electrode and the stationary electrode fixed on the frame of the welding gun are pressed against the parts. The welding gun compresses the parts while electric current is passed therethrough, heating the parts in their contact area and leading to metal melting and weld nugget formation. The EMA can comprise a force sensor providing accurate control over the force and, accordingly, allowing to adjust the force applied to the parts during welding in order to improve welding quality, as too low a force will lead to the possibility of splashing out of molten metal from the center of the weld spot between the sheets being welded and from under the electrodes, thus causing the weld spot to have a lower strength. On the other hand, when too much force is applied, the contact area of the metal sheets increases and the resistance at the weld decreases, which reduces heating of the metal at the weld spot, and the weld nugget size is reduced. The reduced weld nugget size results in lower weld strength. Thus, to ensure the strength of the weld, high accuracy of the force compressing the parts during welding is required. By mounting the force sensor within the EMA, the design of the welding gun can be simplified as there is no need to provide an area for mounting the force sensor on the welding gun, and means for fastening the cable of the force sensor are omitted in order to avoid said means being caught between moving parts of the welding gun.

Another application of an EMA is moving a rod of an industrial press to create a compressive force and, e.g., pressing a bearing onto an electric motor shaft or a gearbox shaft. The EMA in this application also comprises a force sensor allowing to simplify the design of the press and reduce its dimensions, as it is not necessary to attach the force sensor to the press rod in order to reliably measure the force applied to the bearing. By measuring the force and, e.g., comparing the curve of the force generated during the pressing with the reference curve, it is possible to avoid low-quality pressing of the bearing onto the shaft.

A prior art EMA disclosed in US8302273B2 comprises a spindle which can be implemented as a roller screw drive (RSD), a force sensor, and a rotor rigidly attached to the spindle, mounted on bearings and configured for transferring force from the spindle to the force sensor. In this EMA, the friction between the bearings and the housing in which they are mounted, which occurs when an axial force is applied to the rod due to the elastic deformation of the EMA parts, reduces force measurement accuracy. Thus, said friction between the bearing and the housing needs to be eliminated.

Further, a prior art EMA disclosed in EP3553342A1 comprises an inverted RSD, and an internally threaded cylinder mounted on bearings, wherein the bearings, in turn, transmit force from the EMA rod to a force sensor. In this design, the friction between the bearings and the housing, which occurs when an axial force is applied to the rod due to the elastic deformation of the EMA parts, reduces force measurement accuracy. Thus, said friction needs to be eliminated.

Another prior art EMA disclosed in EP3754225A1 allows to eliminate the influence of friction between the bearings and the housing on the accuracy of determining the force on the EMA rod due to the fact that the bearings are mounted in a separate intermediate housing which has a flange clamped between the EMA housing parts. In this case, the force sensors are arranged on said housing with bearings with an axial offset from the bearings so that the sensors are arranged in the area of the intermediate housing which reads the force applied to the EMA rod. There is a radial gap arranged between the intermediate housing and the EMA housing, the gap eliminates the friction therebetween when a force is applied to the EMA rod. Thus, the friction between the bearings and the housing in which they are mounted does not affect the accuracy of force measurement by the force sensor. However, due to the presence of the intermediate housing, in which the bearings are mounted, the prior art solution does not allow to reduce the dimensions, in particular the cross-sectional size, of the EMA. The EMA has a feedback sensor, which can be, e.g., a resolver or an inductive feedback sensor with a rotating rotor fixed on the EMA rotor and a stationary stator attached to the EMA housing. Another disadvantage of the prior art solution is that the design does not allow to align the EMA rotor with a high degree of accuracy and, therefore, to align the sensor rotor with respect to the sensor stator, as centering of the EMA rotor is provided by mounting bearings not in the EMA housing, but in the intermediate housing, which is mounted within another housing forming a part of the EMA housing. Due to dimensional and surface tolerances, the bearing bore in the intermediate housing can be non-coaxial with the cylinder on the intermediate cylinder near the flange. For the same reason, in the main housing, the opening contacted by the cylinder near the flange is non-coaxial with other parts of the EMA, e.g., the flange, through the opening in which the rod passes, and the housing in which the feedback sensor is mounted. For the above reasons, in the prior art solution, the rotor is significantly non-coaxial with the feedback sensor and the guiding hub in the opening of the EMA flange. An increase in the deviation of the physical axis from the geometric axis of the EMA rotor leads to a skew of the rotor axis, which leads to run-out of the shaft on which the sensor rotor is mounted. Further disadvantages include reduced manufacturability of the prior art EMA due to increased complexity of the intermediate housing, in which the bearings are mounted.

Further, an alternative EMA design with a force sensor is known in the art, said design eliminating friction between the outer ring of the bearing and the housing. In particular, said design allows to separate the functions of centering the EMA rotor and transferring force between several bearings. For instance, a rotor which can be a cylinder with an internal thread is mounted on two bearing supports. One support is a radial ball bearing for centering the rotor. The second support is formed by a roller bearing, wherein the rollers are arranged parallel to the EMA axis, and by an angular contact ball bearing. A gap is arranged between the outer ring and the housing. The end face of said angular contact bearing contacts the force sensor, transmitting the force applied to the EMA rod thereto. When a force is applied to the EMA rod and elastic deformation of parts occurs, the EMA rotor moves along the EMA axis within the limits of elastic deformation. The roller bearing does not restrict longitudinal movement and does not create significant friction, as the bearing is lubricated and has an internal radial gap. The disadvantage of the prior art solution is the reduced accuracy of determining the coordinates and the speed of the EMA due to the fact that said roller bearing has the internal radial gap. The presence of the internal radial gap leads to significant radial displacement of the sensor rotor axis, the consequences of which are described above. It should be noted that if a gap in the bearing is present, the displacement of the axis can be cyclic during rotation of the EMA rotor, i.e. rotor run-out may occur due to the fact that the rotating field of the stator of the EMA electric motor attracts magnets mounted onto the outer surface of the cylinder with an internal thread. The deviation of the physical axis of the rotor from the geometric axis further increases the unevenness of the magnitude of the force with which the stator of the EMA electric motor attracts the cylinder with an internal thread within one revolution of the rotor. These features lead to fluctuations in the movement speed of the EMA rod and, consequently, to vibrations of the EMA and in the mechanism on which it is mounted.

Thus, in the prior art, there is a need to improve the accuracy of determining the force which can be reduced, e.g., due to friction between the bearings and the housing. When a force is applied to the EMA rod, elastic deformation of all EMA parts participating in the force chain occurs, including the force sensor, which is in contact at the end with the angular contact bearing, leading to movement of the bearing along with the cylinder with an internal thread along the axis. Further, in some prior art solutions, due to the possibility of contact between the outer surface of the bearing and the inner surface of the housing opening in which the bearing is mounted during deformation of EMA parts, including during the longitudinal movement of the bearing assembly (the cylinder with an internal thread with bearings), a frictional force arises, which changes during the operation of the actuator, e.g., due to an increase in the diameter of the opening caused by heating of the housing.

It should be noted that the frictional force as such does not cause problems as, during the process of bringing the device into service, the EMA is subjected to force calibration. During the calibration process, the EMA presses with the rod or, in the case when the EMA is mounted on a welding gun, with an electrode attached to the rod, onto an external force sensor, and the values sensed by the external force sensor are compared with the values sensed by the internal force sensor. Thus, a correspondence between the magnitude of the force on the internal force sensor and the magnitude of the force on the rod is formed. During operation, said correspondence is used to control or adjust the force on the EMA rod. The force value sensed by the sensor depends on the combination of stiffness of the parts in the same force chain with the force sensor, e.g., housing parts and bearings. In this case, due to the effect of frictional forces as indicated above, the force on the force sensor will differ from the force on the EMA rod by the value of frictional forces arising between the outer rings of the bearings and the housing.

However, when heated, the housing parts increase in size, i.e., the opening in which the bearings are mounted increases in size as well, and, consequently, the radial force with which the opening wall presses on the outer surface of the bearing decreases and, therefore, the frictional force changes, which means that the force on the force sensor will change while the force on the rod remains constant. Therefore, the actual correspondence between the force on the sensor and the force on the rod will change compared to that obtained during calibration, and the measured force will not reflect the magnitude of force on the EMA rod.

In long-term operation, in the presence of friction between the bearings and the housing, said friction can lead to significant wear of the surfaces and to accumulation of wear products there-between, creating resistance to the movement of the bearing and increasing frictional force, and, therefore, further reducing accuracy of the force values measured by the force sensor compared to the force applied to the EMA rod. The solution disclosed in EP3754225A1, wherein this problem is solved, does not allow to create smaller EMAs, as indicated above.

Thus, the object of the present invention is to provide an EMA, the design of which would allow to ensure the implementation of such EMA elements as an electric motor and a RSD having a larger size without altering the overall dimensions of the EMA, which would provide an increase in the EMA force and would also provide an increase in the measurement accuracy of force at the EMA output member as well as rotor centering accuracy. On the other hand, there is a need for an EMA, the design of which would allow to reduce the overall dimensions of the EMA without reducing the EMA force by reducing the size of such EMA elements as the electric motor and the RSD.

### SUMMARY OF THE INVENTION

The object is achieved by providing a linear electromechanical actuator comprising a housing comprising at least two housing parts, a transmission for converting rotational movement into translational movement, the transmission being arranged in the housing and has radial and axial directions, an electric motor arranged in the housing, the electric motor comprises a stator mounted on an inner surface of the housing and a rotor configured for transmitting rotational movement to the transmission for converting rotational movement into translational movement, a bearing support rotatably securing the transmission within the housing and comprising at least two bearings, and a force sensor arranged so that, upon application of an axial load to the transmission, the bearings of the bearing support ensure transmission of axial force from the transmission to the force sensor. The EMA comprises a plate having at least an inner part and an outer part arranged in the radial direction of the transmission, the parts being connected by at least three bridges, wherein the outer part of the plate arranged in the radial direction is clamped between two housing parts, and the inner part of the plate arranged in the radial direction is clamped between two bearings of the bearing support.

It should be noted that the design of the EMA according to the present invention provides for a relatively thin part formed by a plate arranged between bearings, e.g., between the outer rings of the bearings, and clamped by said bearings so that the plate is prevented from moving with respect to the bearings.

The design of the plate is such that the bearing assembly along with the plate clamped between the bearings can move in the radial direction, which allows for it to be centered with respect to the opening in the housing parts using a tooling during assembly, as will be described below in the description of the invention, and allows to provide a gap between the outer rings of the bearings and the opening in the housing parts. The plate has external dimensions allowing it to be clamped between the housing parts of the EMA in order to eliminate movement of the bearing unit in the radial direction after assembly. This feature allows to avoid contact between the outer rings of the bearings and the housing parts and thus completely eliminate friction between said outer rings of the bearings and the housing parts and, therefore, eliminate the influence of friction on the correspondence between the force on the force sensor and the force on the rod.

Due to the fact that the plate does not comprise members for centering the bearings with respect to the housing, the EMA rotor can be centered in the housing using a tooling. Thus, the centering of the rotor, in which the internal thread of the RSD is arranged, is improved, and thus the centering of the RSD rod with respect to the EMA housing and the front flange through the hole in which the EMA rod passes is also improved. Therefore, the skew of the RSD rod relative to the internal thread of the RSD is decreased, thus increasing uniformity of the distribution of loads in the contacts of the RSD threads and, therefore, extending the working life of the RSD. The rotor of the feedback sensor fixedly attached to the EMA rotor can also be centered with respect to the stator of the feedback sensor, which reduces fluctuations in the movement speed of the EMA rod and therefore the vibration of the EMA and the mechanism on which it is mounted is decreased.

In one embodiment, the bearings are mounted into rings made of antifriction material, which allows to eliminate the use of the tooling for centering the rotor when assembling the EMA and to reduce labor intensity during EMA manufacturing.

In another embodiment, the force sensor is arranged on one side of the bearings taken in the axial direction of the transmission so that interaction between the outer ring of one of the bearings and the force sensor is provided. This allows measuring compressive or tensile force depending on which side of the bearings the force sensor is mounted on without complicating the plate design.

In yet another embodiment, a spring is arranged on the side of the bearings opposite to the force sensor taken in the axial direction of the transmission, the spring being configured to apply a preloading to the force sensor, thus allowing to increase the tolerances for linear dimensions (part lengths) of the housing parts in order to achieve a certain preloading force for the force sensor since the spring, due to its lower rigidity compared to that of the EMA housing parts, allows the preloading force to vary within small limits depending on the length of the spring and, accordingly, on the lengths of the housing parts.

In yet another embodiment, the force sensor comprises resistance strain gauges fixed on the plate bridges, which allows measuring the compressive and tensile force without mounting two force sensors on both sides of the bearings.

In yet another embodiment, an abutting ring having a thickness that is equal to the thickness of the plate, is arranged between the inner rings of the bearings. The abutting ring allows increasing the compressing force that may act on the bearings, and, consequently, the magnitude and tolerance of the torque with which the nut is tightened to create the compressive force acting on the bearings

### BRIEF DESCRIPTION OF THE DRAWINGS

For a detailed description of the disclosed embodiments, reference will now be made to the accompanying drawings in which:
**Fig. 1** shows a longitudinal section of the EMA according to one embodiment;
**Fig. 2** shows a partial sectional view of the plate arranged between bearings according to one embodiment;
**Fig. 3** shows a longitudinal section of the EMA according to one embodiment with the rotor centering tooling mounted; **Fig. 4** shows a cross-sectional view of the EMA with centering rings according to one embodiment;
**Fig. 5** shows the EMA in an isometric projection with a visible plate and an angular contact bearing;
**Fig. 6** shows the EMA in an isometric projection with a visible plate;
**Fig. 7** shows a front view of the plate with four bridges between the outer and inner parts of the plate according to one embodiment.

### DETAILED DESCRIPTION OF THE INVENTION

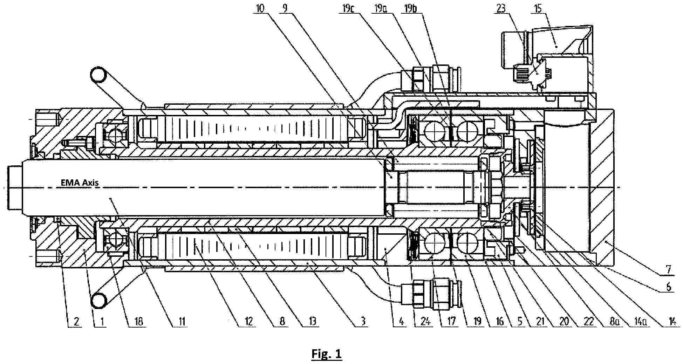

According to Fig. 1, the EMA according to one embodiment comprises a housing consisting of a flange 1 with a seal 2, housings 3, 4, 5, 6 and a cover 7, wherein an electric motor and a roller screw drive (hereinafter referred as RSD or transmission) are arranged and configured to interact with each other. It should be noted that while Fig. 1 shows a housing having a rectangular cross-section, in other embodiments the housing may have another suitable cross-section shape, e.g. circular. The flange 1 can comprise means for fastening the EMA to equipment, e.g., to a welding gun or a press, namely, in one embodiment, threaded holes (not shown in the figure) on the end surface for fastening screws (not shown in the figure).

The RSD comprises a cylinder 8 with an internal thread rotatably mounted within the housing, threaded rollers 9, an RSD screw 10 (hereinafter referred to as screw 10) with a threaded section, and a rod 11, the components mounted in the cylinder 8 and configured for translational movement. The screw 10 is arranged coaxially with the rod 11. At the end of the rod 11, which is arranged outside the EMA, e.g., a threaded hole (not shown in the drawing) can be provided for connection with the working member of the equipment on which it is fixed. It should be noted that in other embodiments, e.g., wherein a large stroke of the rod is not required, the output member of the EMA can be formed by an RSD screw. The RSD has a longitudinal axis of symmetry which coincides with the EMA axis. The EMA Axis is indicated for clarity purpose in figures 1, 3 and 4. The axial direction is defined to be parallel to the said axis and the radial direction is defined to be transverse to the said axis.

Threaded rollers 9 are mounted in said cylinder 8 interacting with the internal thread of the cylinder 8 and the threaded section of the screw 10, and configured for transferring force from the cylinder 8 to the rod 11. The electric motor comprises an electric motor stator 12 and an electric motor rotor. The stator 12 is affixed on the inner surface of the housing 3. The electric motor rotor is formed by mounting permanent magnets 13 of the electric motor rotor onto the outer surface of the cylinder 8 of the RSD. However, in other embodiments, the EMA can have a different type of electric motor, wherein the electric motor rotor can comprise windings. Thus, the cylinder 8 is the rotor shaft of the electric motor. It should be noted that in other embodiments, the part corresponding to the RSD rod can be configured for applying rotational movement by means of an electric motor, and the RSD cylinder can be formed as an output member configured for translational movement.

The EMA further comprises a position sensor 14. The rotor 14a of the sensor 14 is fixedly mounted on the cylindrical surface of the shaft 8a which is fixedly connected to the cylinder 8 and configured for joint rotation. The position sensor 14 is used to determine the rotation angle of the cylinder 8 and transmit the angle value over the cable (not shown in the figure) connected to the connector 15 to a control system (not shown in the figure) in analog or digital form in order to determine the position and rotational speed of the electric motor rotor and, therefore, the speed and position of the rod 11 and the formation of the stator 12 supply voltage. It should be noted that in this embodiment, the cylinder 8 forms part of the roller screw drive and also part of the electric motor rotor.

The cylinder 8 has an internal thread. A thread section with a length approximately equal to the length of the threaded rollers 9 is arranged on the outer surface of the screw 10. The threaded rollers 9 are fixed on the screw 10 so that they cannot move along the axis of the screw 10, but can, in a planetary motion, roll along the thread of the screw 10 and the cylinder 8 with an internal thread. When the cylinder 8 rotates, the threaded rollers 9 move along with the screw 10 and the rod 11 in an axial direction with respect to the cylinder 8. The rod 11 is the output element of the EMA and is configured for translational movement. Thus, the above design of the EMA is an inverted roller screw drive circuit.

According to this and the other embodiments, the rod 11 is thus movable, preferably shiftable, between an extended position, wherein the rod 11 protrudes at least partially outside of the housing and a retracted position wherein the rod is into the housing exactly as shown for example in figure 1 or figures 3 or 4.

The cylinder 8 is mounted on a bearing support consisting of two angular contact ball bearings 16 and 17 which transfer axial load from the cylinder 8 with an internal thread to housing parts 4 and 5. Further, the cylinder 8 is mounted on a bearing support formed by a radial bearing 18.

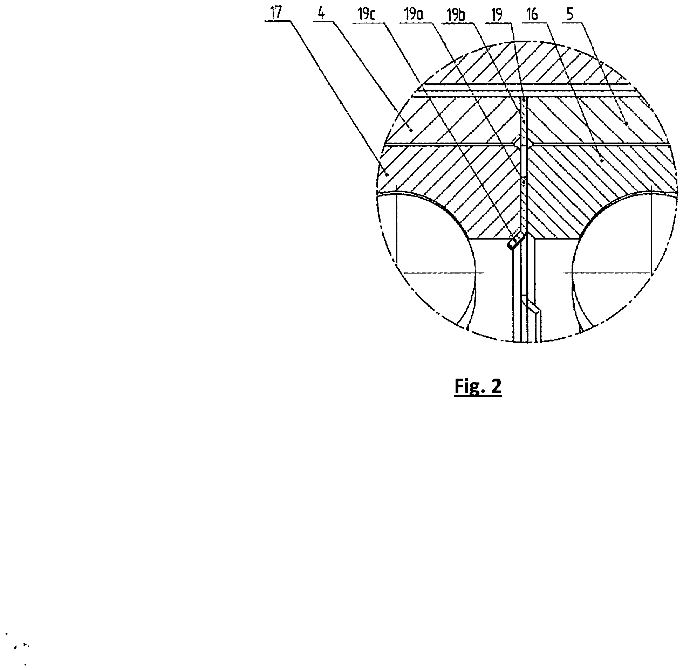

A plate 19 is mounted between the outer rings of bearings 16 and 17. During assembly, by tightening the nut 20, a force is created compressing the bearings 16 and 17. Thus, the axially inner part 19a of the plate 19 is clamped between the bearings 16 and 17. Moreover, the compression force on the plate 19 prevents respective movement of the plate 19 and the bearings 16 and 17. The plate 19 does not require precise centering with respect to the axis of the cylinder 8 and the bearings 16 and 17, however, for its positioning during assembly, the plate 19 has at least two protrusions 19c shown in Fig. 2, the protrusions spaced evenly along the circumference around the axis of the EMA. The protrusions 19c bend around the outer ring of the bearing 16 and/or the bearing 17. The plate 19 can be made, e.g., from a thin sheet of spring steel or bronze.

The outer ring of the bearing 16 abuts against the force sensor 21, which in turn abuts against the ring 22 mounted within the housing part 6. The ring 22 distributes the force from the force sensor to the housing part 6. The force applied to the rod 11 is transmitted to the screw 10 and the cylinder 8 through the rollers 9 and to the force sensor 21 through the bearings 16 and 17. When a force is applied to the rod 11, elastic deformation of all parts in the force chain between the rod 11 and the EMA housing occurs. When the force sensor 21 is deformed, the cylinder 8 and the bearings 16 and 17 move along the EMA axis for a distance equal to the deformation of the force sensor 21. The signal from the force sensor 21 is transmitted to the control system via a connector 23. The force sensor can comprise a strain gauge or a piezoelectric sensor. The strain gauge allows to control the force over a longer force application time period, and a piezoelectric sensor has a faster response, i.e., altering the signal when the force is changed. The cylinder 8 with mounted bearings 16 and 17 and the plate 19 is centered with respect to the axis of housing parts 4 and 5 using a tooling.

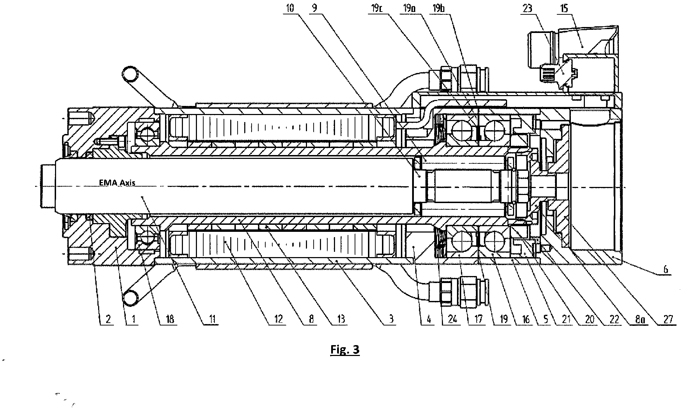

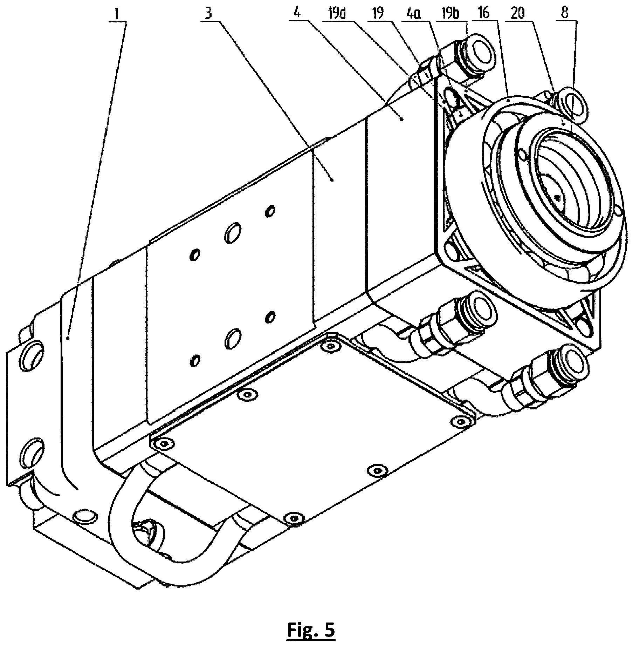

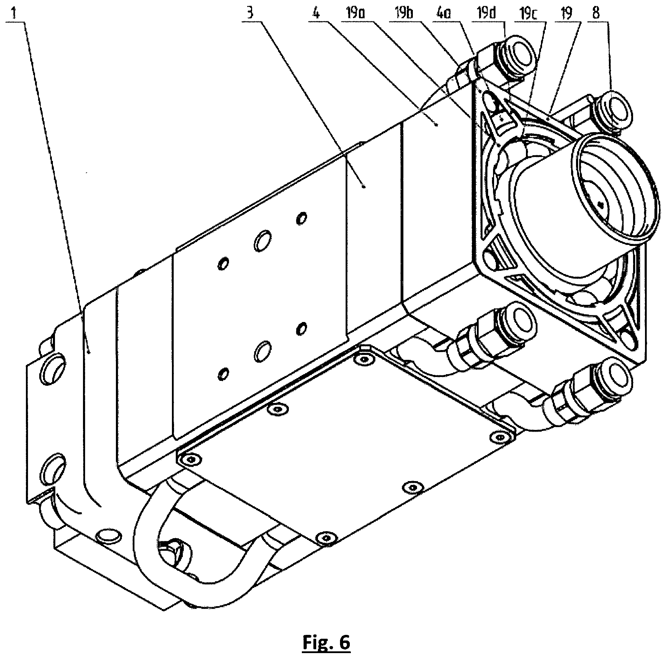

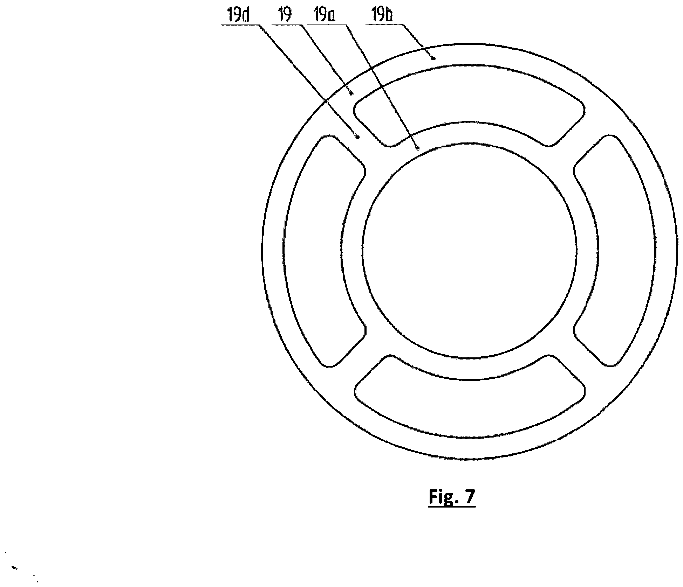

The outer part of the plate 19b is clamped between the housing parts 4 and 5. The compressive force of the housings 4 and 5 is selected based on the lack of opening of the joints between the parts forming the EMA housing, but the force should not be less than a value sufficient to fix the plate 19 and the housings 4 and 5 preventing them from relative movement. The plate 19 is configured to bend elastically in the axial direction along the EMA axis in the radially inner part 19a (closest to the EMA axis) with respect to the radially outer part 19b thereof. The radially inner part 19a is connected to the radially outer part 19b with eight bridges 19d. There may be at least three bridges 19d. The number of bridges 19d depends on the degree of bending of the plate 19 and the required working life. The radially inner part 19a is prevented from moving in the radial direction with respect to the radially outer part 19b. The plate 19, within the limits of its elastic deformation, provides freedom of movement for the cylinder 8 in the longitudinal direction when a force is applied to the rod 11, and prevents radial movement of the cylinder 8. On the ends of housings 4 and 5 closest to the plate 19 in the area of the bridges 19d, recesses (grooves) are formed with a depth allowing freedom of bending for the bridges 19d without contact with the housings 4 and 5. The recesses 4a in the housing 4 are shown in Figs. 5 and 6. A similar recess is provided on the housing 5 opposite the recess 4a. The number of recesses is selected based on the number and location of the bridges 19d. In the described embodiment, eight bridges 19d are formed but there are four recesses as the bridges 19d are positioned relatively close to each other. It should be noted that the shape of the axially outer plate part 19b may vary depending on the shape of the housing, so that, as shown in Fig. 3, it may have a rectangular shape or, as shown in Fig. 7, a circular shape.

The thickness of the plate 19 is selected based on the magnitude of the elastic deformation of the EMA parts since plate 19 must bend to a distance corresponding to the magnitude of elastic deformation of the EMA parts, including the force sensor 21, and based on the required working life of the EMA since the plate 19 must be able to withstand the stresses arising from its bending during the working life of the EMA. In one embodiment, the plate 19 is formed by cutting or punching out a sheet of metal and then folding back the protrusions 19c.

The EMA structure can comprise a spring 24 preloading the force sensor 21, i.e. providing a preload in order to eliminate force measurement by the force sensor 21 near the zero point wherein signal nonlinearity can be observed at the force sensor 21. It should be noted that the more linear the correspondence between the signal level of the force sensor 21 and the magnitude of the force, the more accurately the force on the rod 11 can be controlled. Further, the springs 24 allow to avoid movement of the cylinder 8 away from the force sensor when the working member is moved. Thus, the magnitude of force generated by the springs 24 is selected depending on the weight of the working member, i.e., the force required to move it. The spring 24 can be formed by a spring pack to provide a change in their length corresponding to the change in the length of the force sensor 21 when the force acting on it changes.

In order to achieve elastic properties within the limits of deformation to which the plate 19 is subjected during longitudinal movement of the EMA rotor during operation of the EMA, the plate is made, e.g., of spring steel or bronze and is subjected to heat treatment.

According to another embodiment, the force sensor can comprise strain gauges (not shown in the figures) fixedly attached, e.g. glued, to the bridges 19d of the plate 19. The number of strain gauges is generally equal to the number of bridges 19d, but when a large number of bridges 19d is used, the number of strain gauges can be a multiple of the number of bridges 19d, and the strain gauges are evenly distributed around the axis of the EMA rotor. The strain gauges have, e.g., a rectangular shape, with the short side of the strain gauge facing the rotor axis. The strain gauges are mounted so as to be in the deformation area of the bridge 19d. In this embodiment, the plate 19 can be less flexible and can have an increased thickness. The increased thickness not only allows to provide the plate with working life equal or longer than the working life of the RSD, but also allows for grooves to be made on the end surfaces of the plate in the areas where the strain gauges are mounted, so that the ends of the strain gauges can be located in the contact area of the outer rings of bearings 16, 17 with the inner part 19a of the plate 19, and in the contact area of the housings 4, 5 with the outer part 19b of the plate 19, which allows the deformation area of the bridges 19d to match the deformation area of the strain gauges. In this embodiment, when a compressive or tensile force is applied, the plate bends to one side or the other, as a result of which the strain gauges are deformed along with the plate, due to which their resistance changes, and the signal of the strain gauges changes accordingly. This embodiment allows to measure both compressive and tensile forces due to the fact that the strain gauges can sense changes in the positions of the bridges in the axial direction both due to the application of a compressive force and due to the application of a tensile force to the EMA.

In various embodiments of the EMA, the cylinder 8 can be mounted on at least one bearing support which can be formed by at least two bearings sufficient to ensure fixation and transmission of radial and axial load. An embodiment is contemplated when the bearing support is formed, e.g., by three angular contact bearings, between two of which a part of the plate 19a is clamped, which allows to increase the force that the EMA can withstand or to increase working life when the force is constant.

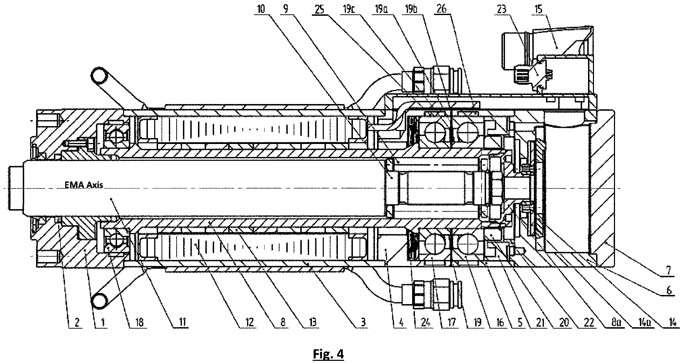

In another embodiment shown in Fig. 4, the bearings 16 and 17, and therefore the rotor, are centered using split rings 25 and 26. The rings 25 and 26 have a through-cut on their circumference so that they can be folded, thus reducing their diameter so as to fit into the grooves in housing parts 4 and 5. The rings 25 and 26 enclose bearings 16 and 17 and contact their outer rings, preventing contact between the outer rings of bearings 16 and 17 and housings 4 and 5. The rings 25 and 26 are made of an antifriction material to reduce the effect of friction created by the rings when they contact the outer rings of bearings 16 and 17. The length of the rings 25 and 26 can be less or more than the length of the bearings 16 and 17. This embodiment simplifies assembly and is suitable for applications that do not have very high demands with regards to force measurement accuracy and determination of position and speed. Despite the contact between the outer rings of bearings 16 and 17 and rings 25 and 26, the magnitude of the friction and the magnitude of the change in friction when the size of housings 4 and 5 changes along with the change in the EMA temperature is insignificant compared to the force that the EMA develops, and, therefore, does not have a significant effect on the change in the correspondence between the force on the force sensor 21 and the force applied to the rod 11. Due to the fact that the rings 25 and 26 are formed by a band, they have a fairly high degree of uniformity in thickness along their circumference. Thus, rings 25 and 26 allow centering of the EMA rotor with high accuracy.

Between the inner rings of the bearings 16 and 17, a ring (not shown in the figure) can be mounted, the ring having thickness equal to that of the plate 19. For instance, the ring can be cut from the same blank used for the plate for a particular EMA. Thus, when tightening the nut 20, it is not required to provide a torque creating a certain force to achieve a frictional engagement between the plate 19 and the outer rings of the bearings 16 and 17, thus preventing relative movement thereof in the radial direction, and, at the same time, excluding excessive compression force from being applied to the bearing balls of the beatings 16 and 17. The nut 20 can be tightened with an increased torque with an increased tolerance, which increases manufacturability of the EMA.

The rod 11 can be prevented from rotating during EMA operation by means of an anti-rotation assembly comprising the shaft of the anti-rotation assembly (not shown in the figure) arranged outside of the EMA parallel to the rod 11. The anti-rotation assembly further comprises a bridge (not shown in the figure) arranged outside of the EMA and attached to the rod 10 and the shaft of the anti-rotation assembly so that it is prevented from respective movement and thus connecting the rod 11 and the shaft of the anti-rotation assembly. The bridge prevents respective movement of the rod 11 and the shaft of the anti-rotation assembly. The anti-rotation assembly further comprises a hub with a connecting flange (not shown in the figure), the hub attached to the side surface of the flange 1 by means of, e.g., fastening screws (not shown in the figure) passed through through-holes (not shown in the figure) in said connecting flange and screwed into threaded openings (not shown in the figure) on the side surface of the flange 1. The hub has a through opening, the axis of which is parallel to the axis of the rod 11 and, therefore, to the axis of the shaft of the anti-rotation assembly. The shaft of the anti-rotation assembly is configured to pass through the hub opening. Thus, the rod 11 is prevented from rotation around its axis and moves translationally.

The EMA assembly method includes the use of a tooling. Fig. 3 shows an EMA according to one of the embodiments during the assembly process without cover 7 and with mounted tooling 27. It should be noted that at this stage of assembly, the fastening screws for tightening the housings 4 and 5 are loosened so that the EMA rotor can move in the radial direction. In order to ensure centering of the housing 4 with respect to the housing 5 at the end closest to the plate 19, each of the housings has two pin holes (not shown in the figure) with pins (not shown in the figure) inserted therein. Preferably, the plane passing through the axes of the pin holes and parallel to the axis of the EMA passes through the axis of the EMA rotor, that is, said pin holes are opposite each other relative to the axis of the EMA. For instance, said pin holes can be placed on the end surface of the grooves 4a in the housing 4 and similar grooves in the housing 5. The pin holes in one of the housings, e.g., in the housing 4, have a diameter allowing mounting of the pin with an interference fit, and in the other housing, e.g., in the housing 5, they have a diameter allowing mounting of the pin with a gap, thus allowing longitudinal movement of the housings 4 and 5 with respect to each other, but at the same time they cannot be displaced or rotated with respect to each other by a distance greater than the gap between the pins and the holes in the housing 5. The tooling is a cylindrical part having an opening that mates with the cylindrical surface of the shaft 8a onto which the rotor 14a of the sensor 14 is mounted, and an outer cylindrical section that mates with the opening of the housing 6 into which the sensor 14 is mounted. Due to the presence of a gap between the outer rings of the bearings 16 and 17 and the opening in the housings 4 and 5, the EMA rotor moves in the radial direction and is centered using the tooling 27. It is important to note that this method allows the rotor 14a and the stator of the sensor 14 to be positioned with high accuracy. The opening in the tooling 27 can be formed by a collet in order to eliminate the influence of the gap between said opening and the cylindrical surface of the shaft 8a, which is necessary for easy mounting and removal of the tooling 27, and the size of the gap may vary due to tolerances in machining. To simplify operation thereof, the tooling 27 can comprise means for securing it within the housing 6 during assembly, e.g., using fastening screws (not shown in the figures) passed through smooth openings (not shown in the figures) and screwed into threaded holes (not shown in the figures) in the housing 6. In this case, the previously described collet can perform the function of these screws to hold the tooling 27.

In one embodiment, the tooling is a ring of small thickness, into the end surface of which four long rods of small diameter are inserted coaxially with the axis of the ring. The rods are evenly spaced along the circumference. The diameter of the arrangement of the rods is selected so that the rods can enter the space (gap) between the outer surfaces of the bearings 16 and 17 and the surface of the openings in the housing parts 4 and 5. A section of each of the rods is formed by rollers ground with high precision. This section of rollers has a length approximately equal to the total length of bearings 16 and 17 and the plate 19. The second section of the tooling rods is formed by flexible bases fixed on the ring base of the tooling. The flexibility of the bases is necessary so that the arrangement of the rods on the tooling and the placement of the EMA rotor in the housing 4 before using the tooling would not require high accuracy during assembly. The number of rods depends on the configuration of the EMA housing. For instance, in order to assemble an EMA with a housing tightened by fastening screws in three places evenly distributed along the circumference, a tooling with three rods is required. To improve the accuracy of centering the rotor with respect to the EMA housing, the diameter of the opening in the housing parts 4 and 5 is selected so that the diameter is slightly smaller than the spanning size of two rods located diametrically opposite each other and pressed against the outer ring of the bearing 16 or 17. In order for the rods to fit in the gap between the outer rings of the bearings 16 and 17 and the housing parts 4 and 5, the housing parts 4 and 5 are heated before assembly so that the diameter of the holes therein increases. When mounting the tooling, each rod passes into the space between the two bridges of the plate 19 and enters the gap between the outer rings of the bearings 16 and 17 and the housing parts 4 and 5. After that, the parts matched in this way are cooled so that the gaps between the tooling rods and the housing parts disappear. Housing parts 4 and 5 are tightened with fastening screws. Finally, the assembly is reheated in order to remove the tooling. The use of the tooling is advantageous in that it does not lead to increased complexity of the EMA parts and increases the force measuring accuracy due to the fact that the friction between bearing 16 and 17 and housing part 4 and 5 is eliminated.

The rings 25 and 26 and the tooling in various embodiments allow centering the EMA rotor with respect to the housing parts, which not only increases the accuracy of positioning the rotor 14a of the sensor 14 with respect to the stator of the sensor 14, but also reduces the skew of the rod 11 relative to the EMA rotor. Therefore, the skew of the RSD rod relative to the internal thread of the RSD is decreased, thus increasing uniformity of the distribution of loads in the contacts of the threads of the cylinder 8, the rollers 9 and the screw 10 and, therefore, extending the working life of the RSD.

Despite the fact that embodiments of the EMA have been described where permanent magnets 13 are mounted on the outer surface of the cylinder 8, the disclosed plate 19 can be arranged so that an increased measurement accuracy of the force applied to the rod 11 and reduced weight and dimensions are achieved in the EMA structure, where the electric motor and the RSD are arranged in series or parallel to each other. The reduction in weight and dimensions is achieved in comparison with the prior art design that eliminates friction between the outer rings of the bearings and the housing. For instance, the electric motor rotor can be formed by mounting permanent magnets on the outer surface of a hollow or solid shaft placed in series with the cylinder 8 and connected thereto without the possibility of relative movement using, e.g., a flange. The cylinder 8 and the rotor can rotate jointly. The electric motor stator in such an embodiment is arranged in the electric motor housing which is placed in series with the housings with the cylinder 8 arranged therein. The electric motor housing and the housings in which the cylinder 8 is arranged are fixed to prevent relative movement by means of, e.g., fastening screws arranged at the corners of the housings, passed through the openings in the electric motor housing and screwed into threaded openings in the housing in which the cylinder 8 is arranged. To provide rotation, the rotor and cylinder 8 have at least one bearing support comprised of at least two bearings and arranged in the housings similar to the housings 4 and 5. The plate 19 is clamped between the outer rings of the bearings and the housings. An embodiment is contemplated, where the rotor shaft on bearing supports and the electric motor stator are arranged in a housing, the axis of which is parallel to the axis of the housings in which the cylinder 8 is rotatably arranged on at least one bearing support comprised of at least two bearings and arranged in the housings similar to the housings 4 and 5. The plate 19 is clamped between the outer rings of the bearings and the housings. The EMA comprises a housing with the electric motor housing and the housings in which the cylinder 8 is arranged connected to one end thereof. Within the housing, pulleys are arranged on the end of the rotor shaft and on the end of a shaft fixedly attached to the cylinder 8. Each pulley has an axial opening through which a fastening screw is passed, screwed into a threaded opening in the rotor shaft and the shaft on the cylinder 8, respectively, in order to prevent relative movement of the pulleys with the rotor and the cylinder 8. A belt is tensioned on the pulleys. When the electric motor rotor rotates, the pulley drives the belt, which in turn drives the pulley on the cylinder 8, which leads to translational movement of the rod 11 as previously described.

The disclosed EMA according to the described embodiment is operated as follows. When AC voltage is supplied to the electric motor stator 12, a rotating electric field of the stator 12 is generated, which rotates the rotor with permanent magnets 13. The position sensor 14 determines the rotation angle of the electric motor rotor. The signal from the position sensor 14 is fed to the control system to determine the position and speed of the EMA rod 11 and to form the supply voltage of the stator 12. The rotation of the rotor leads to the rotation of threaded rollers 9 and their translational movement along with the screw 10 and the rod 11 connected thereto.

The force arising on the rod 11 is transmitted to the screw 10, the rollers 9, the cylinder 8, the bearings 16 and 17 and the force sensor 21. The occurrence of the force on the rod 11 leads to an increase in the current consumed by the stator 12, the value of which is limited by the controller and approximately corresponds to said force. When the force on the force sensor 21 changes, the signal thereof changes accordingly, and the signal is transmitted to the control system. Depending on the signal level of the force sensor 21, the controller gives a command to change the magnitude of the current until the signal of the force sensor 21 is within a predetermined tolerance. It should be noted that other embodiments of the method for controlling the force generated by the EMA are possible. For instance, when the signal of the force sensor 21 changes, the movement of the EMA rod in the corresponding direction is set until the signal of the force sensor 21 is within a predetermined tolerance.

It should be noted that, despite the fact that the above description discloses a design of the EMA with an inverted RSD, where the cylinder 8 is simultaneously a part of the EMA rotor shaft and a part of the RSD, as it comprises an internal thread in contact with the rollers 9, the plate 19 can be used in designs with the so-called conventional RSD. In this case, the EMA rotor is formed by a hollow cylinder (essentially the cylinder 8 in the described embodiment without an internal thread) with magnets 13 affixed on the surface thereof. An elongated RSD screw with an external thread coaxial with the cylinder is arranged within the EMA rotor. The RSD screw is fixedly attached to the shaft 8a which is attached to the EMA rotor. Around the RSD screw, rollers (not shown in the figure) with an external thread are evenly distributed, the rollers arranged within a nut with an internal thread (not shown in the figure), and the threads of the rollers contact the thread of the RSD screw and the thread of the nut. The EMA rod is formed by a cylinder with an axial opening enclosing the RSD screw, the rod is fixedly attached to the nut at one end and can move along with it along the screw axis. The stroke of the EMA rod is limited by the length of the screw. The EMA according to this embodiment is characterized in that when the EMA rotor rotates, the RSD screw also rotates, and the rollers move along with the nut in a planetary motion around the screw axis and, therefore, along with the rod along the RSD screw axis. Therefore, the improvement in centering of the EMA rotor in this embodiment also increases working life of the EMA as the skew of the nut and the rollers with respect to the RSD screw is reduced and, therefore, the uniformity of the distribution of loads in the contacts of the threads of the nut, the rollers and the RSD screw increases.

## Claims

1. A linear electromechanical actuator, comprising:
a housing (1, 3, 4, 5, 6, 7) comprising at least two housing parts (4, 5);
a transmission (8, 9, 10) for converting rotational movement into translational movement, the transmission being arranged in the housing and has radial and axial directions;
an electric motor arranged in the housing, the electric motor comprises a stator (12) mounted on an inner surface of the housing and a rotor configured for transmitting rotational movement to the transmission for converting rotational movement into translational movement;
a bearing support rotatably securing the transmission within the housing and comprising at least two bearings (16, 17);
a force sensor (21) arranged so that, upon application of an axial load to the transmission (8, 9, 10), the bearings (16, 17) of the bearing support ensure transmission of axial force from the transmission (8, 9, 10) to the force sensor (21);
**characterized in that** the linear electromechanical actuator comprises a plate (19) having at least an inner part (19a) and an outer part (19b) arranged in the radial direction of the transmission, the parts being connected by at least three bridges (19d), wherein the outer part (19b) of the plate arranged in the radial direction is clamped between two housing parts (4, 5), and the inner part of the plate arranged in the radial direction is clamped between two bearings (16, 17) of the bearing support.

2. The linear electromechanical actuator according to claim 1, wherein the force sensor (21) is arranged on one side of the bearings (16, 17) taken in the axial direction of the transmission (8, 9, 10) so that interaction between the outer ring of one of the bearings (16, 17) and the force sensor (21) is provided.

3. The linear electromechanical actuator according to claim 2, wherein a spring (24) is arranged on the side of the bearings (16, 17) opposite to the force sensor (21) taken in the axial direction of the transmission (8, 9, 10), the spring (24) being configured to apply a preload to the force sensor (21).

4. The linear electromechanical actuator according to claim 1, wherein the force sensor (21) comprises resistance strain gauges fixed on the plate bridges (19d).

5. The linear electromechanical actuator according to claim 1, wherein the bearings (16, 17) are mounted into rings (25, 26) made of antifriction material.

6. The linear electromechanical actuator according to claim 1 wherein an abutting ring having a thickness that is equal to the thickness of the plate (19), is arranged between the inner rings of the bearings (16, 17).

## Patentansprüche

1. Linearer elektromechanischer Aktor, umfassend:
ein Gehäuse (1, 3, 4, 5, 6, 7), umfassend mindestens zwei Gehäuseteile (4, 5);
ein Getriebe (8, 9, 10) zur Umwandlung einer Rotationsbewegung in eine Translationsbewegung, wobei das Getriebe im Gehäuse angeordnet ist und radiale und axiale Richtungen aufweist;
einen in dem Gehäuse angeordneten Elektromotor, wobei der Elektromotor einen Stator (12), der an einer Innenfläche des Gehäuses angebracht ist, und einen Rotor umfasst, der so konfiguriert ist, dass er eine Rotationsbewegung auf das Getriebe überträgt, um eine Rotationsbewegung in eine Translationsbewegung umzuwandeln;
einen Lagerträger, der das Getriebe drehbar im Gehäuse befestigt und mindestens zwei Lager (16, 17) umfasst;
einen Kraftsensor (21), der so angeordnet ist, dass die Lager (16, 17) des Lagerträgers beim Aufbringen einer Axiallast auf das Getriebe (8, 9, 10) die Übertragung der Axialkraft vom Getriebe (8, 9, 10) auf den Kraftsensor (21) sicherstellen;
**dadurch gekennzeichnet, dass** der lineare elektromechanische Aktor eine Platte (19) umfasst, die mindestens einen inneren Teil (19a) und einen äußeren Teil (19b) aufweist, die in radialer Richtung des Getriebes angeordnet sind, wobei die Teile durch mindestens drei Brücken (19d) verbunden sind, wobei der in radialer Richtung angeordnete äußere Teil (19b) der Platte zwischen zwei Gehäuseteilen (4, 5) eingeklemmt ist, und der in radialer Richtung angeordnete innere Teil der Platte zwischen zwei Lagern (16, 17) der Lagerhalterung eingeklemmt ist.

2. Linearer elektromechanischer Aktor nach Anspruch 1, wobei der Kraftsensor (21) auf einer Seite der Lager (16, 17) in axialer Richtung des Getriebes (8, 9, 10) angeordnet ist, so dass eine Wechselwirkung zwischen dem äußeren Ring eines der Lager (16, 17) und dem Kraftsensor (21) gegeben ist.

3. Linearer elektromechanischer Aktor nach Anspruch 2, wobei eine Feder (24) auf der Seite der Lager (16, 17) angeordnet ist, die dem Kraftsensor (21) in axialer Richtung des Getriebes (8, 9, 10) gegenüberliegt, wobei die Feder (24) so konfiguriert ist, dass sie eine Vorspannung auf den Kraftsensor (21) ausübt.

4. Linearer elektromechanischer Aktor nach Anspruch 1, wobei der Kraftsensor (21) auf den Plattenbrücken (19d) befestigte Dehnungsmessstreifen umfasst.

5. Linearer elektromechanischer Aktor nach Anspruch 1, wobei die Lager (16, 17) in Ringen (25, 26) aus reibungsfreiem Material montiert sind.

6. Linearer elektromechanischer Aktor nach Anspruch 1, wobei ein Anschlagring mit einer Dicke, die der Dicke der Platte (19) entspricht, zwischen den inneren Ringen der Lager (16, 17) angeordnet ist.

## Revendications

1. Actionneur électromécanique linéaire comprenant :
un boîtier (1, 3, 4, 5, 6, 7) comprenant au moins deux parties de boîtier (4, 5) ;
une transmission (8, 9, 10) pour convertir un mouvement de rotation en un mouvement de translation, la transmission étant disposée dans le boîtier et ayant des directions radiale et axiale ;
un moteur électrique disposé dans le boîtier, le moteur électrique comprenant un stator (12) monté sur une surface intérieure du boîtier et un rotor configuré pour transmettre un mouvement de rotation à la transmission pour convertir un mouvement de rotation en un mouvement de translation ;
un support de palier fixant de manière rotative la transmission à l'intérieur du boîtier et comprenant au moins deux paliers (16, 17) ;
un capteur de force (21) disposé de telle sorte que, lors de l'application d'une charge axiale à la transmission (8, 9, 10), les paliers (16, 17) du support de palier assurent une transmission d'une force axiale de la transmission (8, 9, 10) au capteur de force (21) ;
**caractérisé en ce que** l'actionneur électromécanique linéaire comprend une plaque (19) ayant au moins une partie intérieure (19a) et une partie extérieure (19b) disposées dans la direction radiale de la transmission, les parties étant reliées par au moins trois ponts (19d), dans lequel la partie extérieure (19b) de la plaque disposée dans la direction radiale est serrée entre deux parties de boîtier (4, 5), et la partie intérieure de la plaque disposée dans la direction radiale est serrée entre deux paliers (16, 17) du support de palier.

2. Actionneur électromécanique linéaire selon la revendication 1, dans lequel le capteur de force (21) est disposé sur un côté des paliers (16, 17) pris dans la direction axiale de la transmission (8, 9, 10) de sorte que l'interaction entre la bague extérieure d'un des paliers (16, 17) et le capteur de force (21) est assurée.

3. Actionneur électromécanique linéaire selon la revendication 2, dans lequel un ressort (24) est disposé sur le côté des paliers (16, 17) opposé au capteur de force (21) pris dans la direction axiale de la transmission (8, 9, 10), le ressort (24) étant configuré pour appliquer une précharge au capteur de force (21).

4. Actionneur électromécanique linéaire selon la revendication 1, dans lequel le capteur de force (21) comprend des jauges de contrainte à résistance fixées sur les ponts de plaque (19d).

5. Actionneur électromécanique linéaire selon la revendication 1, dans lequel les paliers (16, 17) sont montés dans des bagues (25, 26) réalisées en matériau antifriction.

6. Actionneur électromécanique linéaire selon la revendication 1, dans lequel une bague de butée, ayant une épaisseur qui est égale à l'épaisseur de la plaque (19), est disposée entre les bagues intérieures des paliers (16, 17).
